Europäisches Patentamt

European Patent Office

Office européen des brevets

(11) Publication number: **0 080 904**
**B1**

## (12) EUROPEAN PATENT SPECIFICATION

(45) Date of publication of patent specification: **05.07.89**

(21) Application number: **82306408.4**

(22) Date of filing: **02.12.82**

(51) Int. Cl.⁴: **G 05 D 3/00**

(54) Multiposition controller.

(30) Priority: **02.12.81 JP 194063/81**

(43) Date of publication of application:
**08.06.83 Bulletin 83/23**

(45) Publication of the grant of the patent:
**05.07.89 Bulletin 89/27**

(84) Designated Contracting States:
**DE FR GB**

(56) References cited:
**DE-A-1 918 748**
**DE-B-1 125 520**
**US-A-2 800 618**

(73) Proprietor: **Matsushita Electric Industrial Co.,
Ltd.
1006, Oaza Kadoma
Kadoma-shi Osaka-fu, 571 (JP)**

(72) Inventor: **Yamanishi, Kazuhiro
3-106, Arakawa
Higashiosaka-shi Osaka-fu (JP)**
Inventor: **Mino, Mineo
1-17-10 Nasuzukuri
Hirakata-shi Osaka-fu (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

The present invention relates to a multi-position controller for controlling the position of an object.

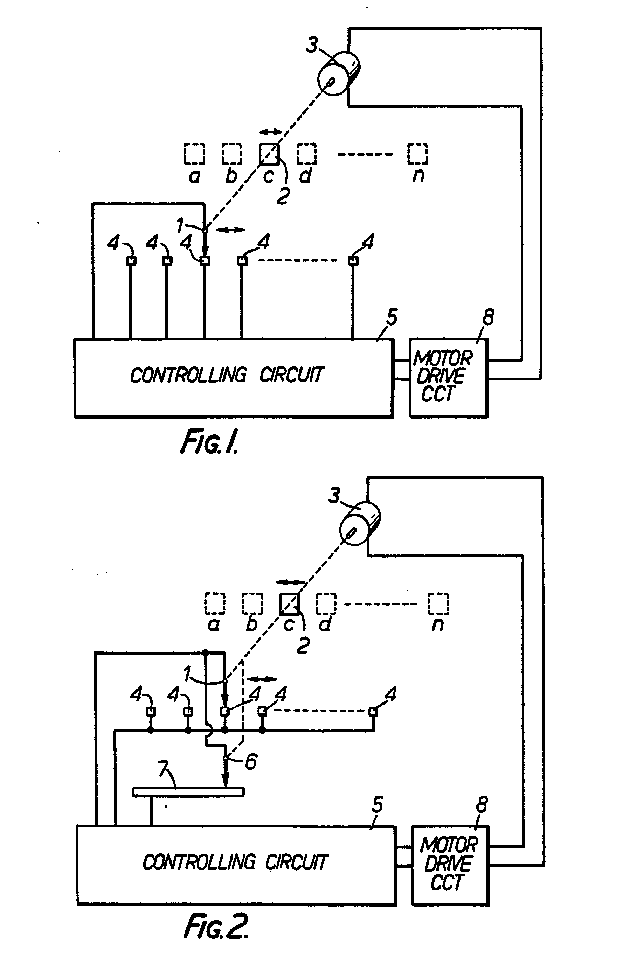

Conventionally, when an object is to be position-controlled, a motor or like means is rotated in accordance with absolute position information. This will be described as follows with reference to Figure 1.

Referring to Figure 1, the conventional position controller includes a movable contact 1, an object 2 to be controlled, a motor 3, fixed contacts 4, a controlling circuit 5 and a motor driving circuit 8. The movable contact 1 is mechanically coupled to the object 2, which in turn is arranged to be driven by the motor 3. More specifically, when the motor rotates, the position of the object moves from *a* to *b. c. d. ... n.* At these positions, respectively corresponding fixed contacts 4 are arranged to be connected to the movable contact 1.

Now, assuming that the object 2 is positioned at the position *c* and is to be moved to the position *a,* the information that the object 2 is at position *c* is obtained from an input signal to the controlling circuit 5. Accordingly, the controlling circuit 5 outputs a control signal to the motor driving circuit 8 to cause the motor 3 to rotate so as to move the object to the position *a.* When the object arrives at position *a,* the motor is stopped. At an initial state where the movable contact is connected to the fixed contact, such movement can be achieved. On the other hand, at an initial state where the movable contact is not connected to any one of the fixed contacts, the motor has to be first rotated in either direction for the movable contact to be connected to one of the fixed contacts before the above described movement of the object to position *a* can be achieved.

However, in this conventional case, the number of fixed contacts and connecting lines between the fixed contacts and the controlling circuit must correspond to the number of such multiple positions between which the object is to be moved. Further, when such multiple positions are increased in number, the number of fixed contacts, connecting lines and input terminals of the controlling circuit must be increased likewise.

German patent specification DE—A—1,125,520 discloses a configuration similar to that described above in relation to Fig. 1.

It is also an object of this invention to provide a multi-position controller which is simple in construction and yet can achieve accurate position controlling of an object.

Accordingly, the present invention provides a multiposition controller for moving an object to a desired one of a plurality of predetermined positions, comprising a drive means for driving said object, a first switching means arranged to provide a switching signal in response to movement of said object between said predetermined positions, and a control means responsive to said switching signal for producing a control signal for controlling said drive means, characterised by said first switching means having a single output line for supplying said control means with said switching signal, and by a second switching means which changes its on/off state when said object moves from one side to the other of a datum position which is one of the plurality of predetermined positions, said second switching means being connected to said control means so that said control means, on receipt of a command to move said object to said desired one of said predetermined positions, initially controls said drive means in accordance with the on/off state of said second switching means to move said object to said datum position, said control means including a counter for counting said switching signal from said single output line of said first switching means, said counter having a first predetermined count corresponding to said datum position and operating as an up counter or a down counter in accordance with said control signal until it reaches a second predetermined count corresponding to said desired one of said plurality of predetermined positions.

Features of the invention will be apparent from the following detailed description of the preferred embodiment thereof, given by way of example, when taken together with the accompanying drawings, in which:

Figure 1 is a schematic circuit diagram, partially in block form, of the conventional multiposition controller;

Figure 2 is a schematic circuit diagram, partially in block form, of an example of a multiposition controller according to this invention; and

Figure 3 is a schematic circuit diagram, partially in block form, of a multiposition controller as shown in Figure 1, but showing a specific example of a controlling circuit.

Referring to Figure 2, like structural elements shown therein as compared to Figure 1 are designated by like reference numerals, and further detailed description thereof will not be given. The position controller further includes a second movable contact 6, and a contact or switching element 7 for detecting a position of the object 2 relative to the datum position c. (The element 1 will hereinafter be called the first movable contact). These first and second movable contact 1 and 6 are linked in operation. Further, the fixed contacts 4 are connected by a single common line as shown. The contact 7 is in contact with the second movable contact 6 at positions leftside from and including the datum position *c,* while the contact 7 is out of contact with the second movable contact 6 at positions rightside from the datum position *c.* .

Next, the operation of this exemplified multiposition controller will be described. First let us assume that, at an initial state, the object 2 moves to the datum position *c* from any arbitrary position. For example, when the object 2 is at position *a,* the second movable contact 6 is in contact with the contact 7. So, such position can be detected as a position leftside from the datum position, *c,* and thus the controlling circuit 5 outputs a driving signal for driving the object 2, more specifically the controlling circuit 5 outputs a motor driving signal for driving the motor driving circuit 8 so as to rotate the motor 3 for the object 2 to be moved rightward. When the second movable contact 6 passes the datum position $c$ and goes away from the contact 7, the object 2 is then moved back leftward until the first movable contact 1 comes into contact with the first fixed contact 4 after such return leftward movement. The position of such first fixed contact 4 is judged as the datum position by the controlling circuit 5, which at the same time outputs a driving or control signal to stop the rotation of the motor 3. In such manner, the object 2 can be brought to the datum position.

On the other hand, when the object 2 is at a position, for example position $n$, rightward from the datum position $c$, the second movable contact 6 is not in contact with the contact 7. So, the position of the object is judged as being to the rightside from the datum position $c$ by the controlling circuit 5, which at the same time outputs a driving or control signal to move the object 2 leftward. Just as in the first mentioned case, the position, where the first movable contact 1 first comes into contact with the first fixed contact 4 after the second movable contact 6 comes into contact with the contact 7, is judged as the datum position by the controlling circuit 5, which at the same time outputs a driving or control signal to stop the rotation of the motor 3. That is, wherever the object 2 is originally positioned, the object 2 can arrive at the datum position $c$ in accordance with the same algorithm. By presetting a counting means in the controlling circuit 5 at an initial value at the time the object 2 arrives at the datum position $c$, and by up-counting or down-counting the counting means in accordance with breaking or making, namely switching off or on, between the first movable contact 1 and the fixed contacts 4, the value of the counting means can be made to correspond to the moved position of the object 2. So, by moving the object 2 in accordance with such counter value, the necessary multiposition controlling can be achieved.

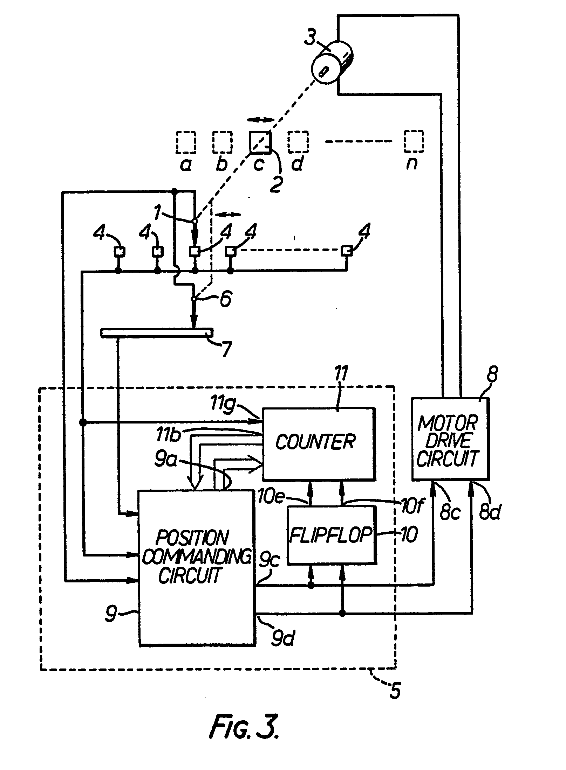

Figure 3 shows a specific example of the controlling circuit 5 of Figure 2, in which the controlling circuit employs a position commanding means 9, a counting means 11, and a pulse signal holding means in the form of a flip-flop 10 for holding up-counting state or down-counting state of the counting means even when the supply of the driving signal is stopped. Such controlling circuit or means 5 is in practice preferred to be integrally constructed by a single microcomputer which has the functions of the position commanding means, the counting means and the pulse holding means without using discrete circuits respectively for the three means. However, for the sake of easier description and understanding, the three means are shown in Figure 3 as discrete circuits.

Referring to Figure 3 the position commanding means or circuit 9 achieves various judgements or detections as described above with reference to Figure 2. That is, the position commanding circuit 9 receives various input signals from the contact 7, the fixed contacts 4, the first movable contact 1 and the second movable contact 6, and outputs various driving or control signals to the motor driving circuit 8. The output signals of the position commanding circuit 9 are also supplied to the counting means or counter 11 for achieving the above described presetting, and further the output signals of the counter 11 are supplied back to the position commanding circuit 9 for achieving the movement of the object 2 in accordance with the counter value.

Next, the operation of the above counter 11 will be described. Let us assume now that a value "5" is preset in the counter 11 at the datum position $c$, and that the position commanding circuit 9 supplies output $9c$ to the input $8c$ of the driving circuit 8 of the motor 3 for causing the object 2 to move leftward. In such state, the counter 11 is set at its down-counting state by an output $10e$ of the flip-flop circuit 10. This flip-flop functions as a pulse signal holding means for holding an up-counting state or a down-counting state of the counter 11 when supply of the driving signal is stopped. Further, the fixed contact 4 is connected to an input $11g$ of the counter 11. So, at the moment the first movable contact 1 separates from one of the fixed contacts 4, the counter 11 down-counts by "1". The counter 11 further down-counts by "1" at the moment the first movable contact 1 next comes into contact with a fixed contact 4 while moving in the same direction. So, the counter value of the counter 11 corresponding to the position $b$ is "3".

Let us assume, on the other hand, that an output $9d$ is supplied to an input $8d$ of the motor driving circuit 8. In this state, the counter 11 is brought to its up-counting state by an output $10f$ of the flip-flop 10. So, just as in the above case, the counter 11 up-counts by "1", each time the first movable contact 1 breaks and makes (switches off and on) with a fixed contact 4. In this manner, the values of the counter 11 corresponding to the positions $a$, $b$, $c$ and $d$ are "1", "3", "5" and "7", respectively.

Sometimes, when the object 2 moves from the position $b$ to the position $c$, it may happen that the position commanding circuit 9 may stop the motor rotation (namely supply a driving or control signal to stop the motor rotation) for some reason just before the object 2 arrives at the position $c$ while the first movable contact 1 is not in contact with any fixed contact 4. In such a case, the motor still continues its rotation for a short time by virtue of its inertia and then stops. It may happen, in this case, that the first movable contact 1 finally gets into contact with a fixed contact 4, as a special case. However, by using the flip-flop 10 which remains at its up-counting or down-counting state even in such special case, the counting operation can be maintained. This is one of the features of this embodiment of the invention, and thereby counting failure can be prevented, and an accurate counting corresponding to any position of the object 2 can be achieved.

As will be apparent from the foregoing description, accurate position controlling for an arbitrary number of multiple positions can be achieved with basically only three connecting lines and by using e.g. a pulse signal holding circuit according to the multiposition controller of this invention. Further, the datum position, e.g. position c, can be determined at a constant position. Further, by using a micro-computer or microprocessor for the controlling circuit, it is not necessary to modify the hardware portion of the multiposition controller, but only to modify the software portion thereof, when the multiple positions increase or decrease in number. The use of such microcomputer for the controlling circuit 5 is thus to be construed as falling within the scope of the following claims.

**Claims**

1. A multiposition controller for moving an object (2) to a desired one of a plurality of predetermined positions, comprising a drive means (8) for driving said object (2), a first switching means (1, 4) arranged to provide a switching signal in response to movement of said object between said predetermined positions, and a control means (5) responsive to said switching signal for producing a control signal for controlling said drive means, characterised by said first switching means (1, 4) having a single output line for supplying said control means (5) with said switching signal, and by a second switching means (6, 7) which changes its on/off state when said object (2) moves from one side to the other of a datum position (c) which is one of the plurality of predetermined positions, said second switching means being connected to said control means (5) so that said control means (5), on receipt of a command to move said object to said desired one of said predetermined positions, initially controls said drive means (8) in accordance with the on/off state of said second switching means (6, 7) to move said object (2) to said datum position, said control means (5) including a counter (11) for counting said switching signal from said single output line of said first switching means, said counter (11) having a first predetermined count corresponding to said datum position and operating as an up counter or a down counter in accordance with said control signal until it reaches a second predetermined count corresponding to said desired one of said plurality of predetermined positions.

2. A multiposition controller according to claim 1, wherein said control means (5) further comprises a hold circuit (10) for holding a direction signal which is generated by said counter (11) to indicate its up- or down-counting state, said counter (11) operating in accordance with an output signal of said hold circuit (10).

3. A multiposition controller according to claim 1, wherein said first switching means (1, 4) comprises a movable element (1) which is movable in association with said object (2), and a plurality of fixed elements (4) connected in common with said single output line and arranged to correspond to said plurality of predetermined positions of said object (2), said first switching means (1, 4) being in an on state only when said movable element (11) is connected to one of said plurality of fixed elements (4).

4. A multiposition controller according to claim 1, wherein said second switching means (6, 7) comprises a movable element (6) which is movable in association with said object (2) and a single fixed element (7) to which said movable element (6) is connected in a part of said movable range of said object (2) including an end of said movable range, said second switching means (6, 7) being in an on state only when said movable element (6) is connected to said fixed element (7).

**Patentansprüche**

1. Mehrstellungssteuergerät zum Bewegen eines Gegenstandes (2) auf eine aus einer Mehrzahl von Stellungen ausgewählte Stellung, enthaltend eine Antriebseinrichtung (8) zum Bewegen des Gegenstandes (2), eine erste Schalteinrichtung (1, 4), die dazu vorgesehen ist, in Abhängigkeit von der Bewegung des Gegenstandes zwischen den vorbestimmten Stellungen ein Schaltsignal zu liefern, und eine Steuereinrichtung (5), die auf das Schaltsignal anspricht, um ein Steuersignal zur Steuerung der Antriebseinrichtung zu erzeugen, dadurch gekennzeichnet, daß die erste Schalteinrichtung (1, 4), eine einzige Ausgangsleitung zur Versorgung der Steuereinrichtung (5) mit dem Schaltsignal aufweist, und daß eine zweite Schalteinrichtung (6, 7) vorgesehen ist, die ihren Ein/Aus-Zustand ändert, wenn der Gegenstand (2) sich von einer zur anderen Seite einer Grundstellung (c) bewegt, die eine aus der Vielzahl vorbestimmter Stellungen ist, daß die zweite Schalteinrichtung mit der Steuereinrichtung (5) derart verbunden ist, daß die Steuereinrichtung (5) bei Empfang eines Befehls zur Bewegung des Gegenstandes auf die ausgewählte der vorbestimmten Stellungen am Anfang die Antriebseinrichtung (8) in Übereinstimmung mit dem Ein/Aus-Zustand der zweiten Schalteinrichtung (6, 7) steuert, um den Gegenstand (2) auf die Grundstellung zu bewegen, daß die Steuereinrichtung (5) einen Zähler (11) enthält, um das Schaltsignal von der einzigen Ausgangsleitung der ersten Schalteinrichtung zu zählen, welcher Zähler (11) einen ersten vorbestimmten Zählstand entsprechend der Grundstellung enthält und als ein Aufwärtszähler oder als ein Abwärtszähler in Übereinstimmung mit dem Steuersignal arbeitet, bis er einen zweiten vorbestimmten Zählstand erreicht, der der aus der Vielzahl vorbestimmter Stellungen ausgewählten Stellung entspricht.

2. Mehrstellungssteuergerät nach Anspruch 1, bei dem die Steuereinrichtung (5) weiterhin eine Halteschaltung (10) aufweist, um ein Richtungssignal zu halten, das von dem Zähler (11) erzeugt wird, um seinen Aufwärts- oder Abwärts-Zählzustand anzuzeigen, welcher Zähler (11) in Übereinstimmung mit einem Ausgangssignal der Halteschaltung (10) arbeitet.

EP 0 080 904 B1

3. Mehrstellungssteuergerät nach Anspruch 1, bei dem die erste Schalteinrichtung (1, 4) ein bewegliches Element (1) aufweist, das zusammen mit dem Gegenstand (2) bewegbar ist, und eine Vielzahl fester Elemente (4) enthält, die zusammen an die einzige Ausgangsleitung angeschlossen und so angeordnet sind, daß sie der Vielzahl vorbestimmter Stellungen des Gegenstandes (2) entsprechen, wobei die erste Schalteinrichtung (1, 4) sich in einem Einschaltzustand nur dann befindet, wenn das bewegliche Element (1) mit einem aus der genannten Vielzahl fester Elemente (4) verbunden ist.

4. Mehrstellungssteuergerät nach Anspruch 1, bei dem die zweite Schalteinrichtung (6, 7) ein bewegliches Element (6) enthält, das zusammen mit dem Gegenstand (2) bewegbar ist, und ein einziges festes Element (7) enthält, mit dem das bewegliche Element (6) in einem Teilbereich des Bewegungsbereiches des Gegenstandes (2) verbunden ist, der ein Ende des genannten Bewegungsbereiches umfaßt, wobei sich die zweite Schalteinrichtung (6, 7) in einem Einschaltzustand nur dann befindet, wenn das bewegliche Element (6) mit dem genannten festen Element (7) verbunden ist.

**Revendications**

1. Dispositif de commande de positions multiples destiné à déplacer un objet (2) vers l'une voulue de plusieurs positions prédéterminées, comportant un dispositif d'entraînement (8) pour entraîner ledit objet (2), un premier dispositif de commutation (1, 4) agencé pour produire un signal de commutation en réponse au mouvement dudit objet entre lesdites positions prédéterminées et un circuit de commande (5) qui réagit audit signal de commutation en produisant un signal de commande pour commander ledit dispositif d'entraînement, caractérisé en ce que ledit premier dispositif de commutation (1, 4) comporte une seule ligne de sortie pour fournir audit circuit de commande (5) ledit signal de commutation et en ce qu'un second dispositif de commutation (6, 7) passe dans son état d'ouverture/fermeture quand ledit objet (2) se déplace d'un côté à l'autre d'une position de référence (c) qui est l'une des plusieurs positions prédéterminées, ledit dispositif de commutation étant connecté audit circuit de commande (5) de manière que ledit circuit de commande (5), à la réception d'une com-

mande de déplacer ledit objet jusqu'à l'une voulue desdites positions prédéterminées, commande initialement ledit dispositif d'entraînement (8) en fonction de l'état d'ouverture/fermeture dudit second dispositif de commutation (6, 7) afin de déplacer ledit objet (2) vers ladite position de référence, ledit circuit de commande (5) comprenant un compteur (11) pour compteur ledit signal de commutation provenant de ladite seule ligne de sortie dudit premier dispositif de commutation, ledit compteur (11) ayant un premier comptage prédéterminé correspondant à ladite position de référence et fonctionnant comme un compteur ou un décompteur en fonction dudit signal de commande jusqu'à ce qu'il atteigne un second comptage prédéterminé correspondant à celle voulue desdites plusieurs positions prédéterminées.

2. Dispositif de commande de positions, multiples selon la revendication 1, dans lequel ledit circuit de commande (5) comporte en outre un circuit de maintien (10) destiné à maintenir un signal de direction qui est produit par ledit compteur (11) afin d'indiquer son état de comptage ou de décomptage, ledit compteur (11) fonctionnant en fonction d'un signal de sortie dudit circuit de maintien (10).

3. Dispositif de commande de positions multiples selon la revendication 1, dans lequel ledit premier dispositif de commutation (1, 4) comporte un élément mobile (1) qui se déplace en association avec ledit objet (2) et plusieurs éléments fixes (4) connectés en commun à ladite seule ligne de sortie et agencés pour correspondre auxdites plusieurs positions prédéterminées dudit objet (2), ledit premier dispositif de commutation (1, 4) étant dans l'état de fermeture seulement quand ledit élément mobile (1) est connecté à l'un desdits plusieurs élément fixes (4).

4. Dispositif de commande de positions multiples selon la revendication 1, dans lequel ledit second dispositif de commutation (6, 7) comporte un élément mobile (6) qui se déplace en association avec ledit objet (2) et un seul élément fixe (7) auquel ledit élément mobile (6) est connecté dans une partie de ladite plage de déplacement dudit objet (2) comprenant une extrémité de ladite plage mobile, ledit second dispositif de commutation (6, 7) étant dans un état de fermeture seulement quand ledit élément mobile (6) est connecté audit élément fixe (7).

*Fig. I.*

*Fig. 2.*

1

FIG. 3.